# NEUE EUROPÄISCHE PATENTSCHRIFT

(11) **EP 1 793 979 B2**
(45) Veröffentlichungstag und Bekanntmachung des Hinweises auf die Entscheidung über den Einspruch: **09.04.2014**
(45) Hinweis auf die Patenterteilung: 11.02.2009
(21) Anmeldenummer: 05771869.4
(22) Anmeldetag: 09.08.2005
(51) Int. Cl.: B22F 3/00, B28B 1/00, B22F 3/105

(54) **VORRICHTUNG ZUR HERSTELLUNG VON FORMKÖRPERN**
DEVICE FOR PRODUCING MOLDED BODIES
DISPOSITIF POUR REALISER DES CORPS MOULES

(30) Priorität: 27.08.2004 DE 102004041633
(43) Veröffentlichungstag der Anmeldung: 13.06.2007
(60) Teilanmeldung: 09001791.4
(73) Patentinhaber: SLM Solutions GmbH, 23556 Lübeck (DE); Fockele, Matthias, 33178 Borchen (DE)
(72) Erfinder: FOCKELE, Matthias, 33178 Borchen (DE)
(74) Vertreter: Tiesmeyer, Johannes
(86) Internationale Anmeldenummer: PCT/EP2005/008649
(87) Internationale Veröffentlichungsnummer: WO 2006/024373

(56) Entgegenhaltungen:
- EP-A- 0 632 761
- EP-A- 0 946 325
- EP-A- 1 234 625
- EP-A- 1 514 622
- EP-A1- 0 689 904
- WO-A-2004/014636
- WO-A1-00//48233
- DE-A1- 10 112 591
- DE-A1- 10 230 396
- DE-A1- 10 236 907
- DE-A1- 10 332 572
- DE-A1- 19 816 739
- DE-A1- 19 905 067
- DE-U1- 20 107 262
- DE-U1- 20 318 721
- DE-U1- 29 506 716
- US-A- 5 837 960
- US-A- 5 940 674
- US-A1- 2001 045 678
- US-A1- 2004 084 814
- US-B1- 6 375 874
- J.E. SMUGERSKY ET AL.: 'Using the Laser Engineered Net Shaping (LENS TM) Process to Produce Complex Components from a CAD Solid Model ohne Geheimhaltungsverpflichtung veröffentlicht: in the proceedings of the SPIE - The international Society for Optical Engineering, Lasers as Tools for Manufacturing', Bd. 2993, 17 Februar 1997, SANDIA NATIONAL LABORATORIES Seiten 3 - 12
- D. L. BOURELL: 'Free Form Fabrication of Metallic Components Using Laser Engineered Net Shaping (LENS TM); ohne Geheimhaltungsverpflichtung veröffentlicht auf dem Solid Free Form Symposium', 14 August 1996, M.L. GRIFFTH ET AL., AUSTIN, TEXAS
- J.W. SEARS: 'Direct Laser Powder Deposition "State of the Art"', November 1999, KNOLLS ATOMIC POWER LABORATORY, SCHENCTADY - NEW YORK Seiten 1 - 14

## Beschreibung

Die Erfindung betrifft eine Vorrichtung zur Herstellung von Formkörpern durch schichtweises Aufbauen aus pulverförmigem, insbesondere metallischem oder keramischem Werkstoff, mit den Merkmalen des Oberbegriffs von Anspruch 1.

Die Erfindung bezieht sich insbesondere auf das Gebiet des selektiven Laserschmelzens und geht sowohl verfahrensmäßig als auch vorrichtungsmäßig von einer Technologie aus, wie sie z. B. in der DE 199 05 067 A1, in der DE 101 12 591 A1, in der WO 98/24574 oder in der dazu korrespondierenden DE 196 49 865.1 beschrieben ist, wenngleich die Erfindung auch auf das Gebiet des Lasersintems anwendbar ist.

Bei der hier betrachteten Technologie geht es um eine Vorrichtung zur Herstellung eines Formkörpers, z. B. eines Prototyps eines Produkts oder Bauteils, eines Werkzeugs oder eines Ersatzteils, einer Prothese, insbesondere Zahnprothese, orthopädische Prothese usw., entsprechend dreidimensionalen CAD-Daten eines Modells des Formkörpers durch schichtweises Aufbauen aus pulverförmigem metallischem oder keramischem Werkstoff, bei dem nacheinander mehrere Pulverschichten übereinander aufgebracht werden, wobei jede Pulverschicht vor dem Aufbringen der nächstfolgenden Pulverschicht mit einem normalerweise fokussierten Laserstrahl in seinem vorgegebenen Bereich, der einem ausgewählten Querschnittsbereich des Modells des Formkörpers entspricht, erhitzt wird, und bei dem der Laserstrahl jeweils entsprechend den CAD-Querschnittsdaten des ausgewählten Querschnittsbereichs des Modells oder daraus abgeleiteten Daten über die jeweilige Pulverschicht geführt wird. Das Werkstoffpulver wird beim selektiven Laserschmelzen als bindemittel- und flussmittelfreies, metallisches, keramisches oder gemischt metallisch/keramisches Werkstoffpulver aufgebracht und durch den Laserstrahl auf Schmelztemperatur erhitzt, wobei die Energie des Laserstrahls so ausgewählt wird, dass das Werkstoffpulver an der Auftreffstelle des Laserstrahls über seine gesamte Schichtdicke möglichst vollständig aufgeschmolzen wird. Über der Zone der Wechselwirkung zwischen dem Laserstrahl und dem metallischen Werkstoffpulver wird eine Schutzgasatmosphäre, z. B. Argon-Atmosphäre, aufrechterhalten.

Die hier betrachteten Vorrichtungen werden auch als Rapid-Prototyping-Vorrichtungen oder Vorrichtungen zum selektiven Laserschmelzen bezeichnet.

Aus der WO 94/15771 A1 ist eine Vorrichtung der eingangs genannten Art mit einer Schleusenkammer bekannt, wobei diese Schleusenkammer ein gesonderter Entnahmebehälter ist, der an eine Öffnung des Prozessraumgehäuses, die normalerweise mittels einer Tür dicht verschlossen ist, anschließbar ist und ebenfalls eine Öffnung mit einer Verschlusstür aufweist, wobei die Öffnung des Entnahmebehälters der Öffnung des Prozessraumes unmittelbar gegenüberliegt, so dass nach Öffnen der Türen des Entnahmebehälters und des Prozessraums ein in dem Prozessraum fertiggestellter Formkörper mittels einer Ausgabevorrichtung vom Prozessraum in den Entnahmebehälter geschoben werden - und eine zuvor darin erzeugte Schutzgasatmosphäre aufrechterhalten werden kann. Nach Schließen der Türen des Prozessraumes und des Entnahmebehälters wird letzterer vom Prozessraumgehäuse entfernt. Im Prozessraum kann dann in der aufrechterhaltenen Schutzgasatmosphäre ein neuer Formkörper hergestellt werden. Der zuvor mit dem Entnahmebehälter entfernte Formkörper kann unterdessen aus dem Entnahmebehälter entnommen werden. Zur Entnahme von Gegenständen aus dem Entnahmebehälter ist es bei dem bekannten Stand der Technik stets erforderlich, den Entnahmebehälter vollständig vom Prozessraumgehäuse zu entkoppeln.

Aufgabe der Erfindung ist es, den Betrieb einer Vorrichtung der eingangs genannten Art zu vereinfachen und kontinuierlicher zu gestalten und insbesondere den Anwendungsbereich einer solchen Vorrichtung mit einfachen Mitteln zu vergrößern und flexibler zu machen.

Diese Aufgabe wird durch ein Vorichtung mit den Merkmalen von Anspruch 1 gelöst.

Die Schleusenkammer ermöglicht es, ohne Unterbrechung der Aufrechterhaltung der Schutzgasatmosphäre im Prozessraum Gegenstände aus dem Prozessraum herauszunehmen und nach außen zu bringen oder ggf. Gegenstände von außen in den Prozessraum einzubringen. Dies kann mit der Handhabungsvorrichtung auf eine sehr einfache und flexible Weise erfolgen, ohne die Schleusenkammer vom Prozessraumgehäuse entfernen zu müssen. Die Schleusenkammer kann benutzt werden, um z. B. fertiggestellte Formkörper aus dem Prozessraum nach außen zu holen oder um Pulverreservoirs bzw. Pulverwechselpatronen auszutauschen usw., ohne im Prozessraum die Schutzgasatmosphäre aufzuheben oder mit Außenluft zu kontaminieren.

Gemäß einer Ausführungsform der Erfindung ist die Schleusenkammer auch dazu nutzbar, aus dem Prozessraum ausgebrachtes Pulver zur Rückgewinnung in Schutzgasatmosphäre aufzunehmen. Die Pulverrückgewinnung unter möglichst weitgehendem Ausschluss von Sauerstoff hat sich bei vielen Pulvermaterialien, insbesondere auch bei Titan, als vorteilhaft bei der Wiederverwendung des Pulvers erwiesen. Im einfachsten Fall könnte das im Prozessraum nach einem Bauprozess nicht mehr benötigte Pulver mittels einer Handhabungsvorrichtung aus dem Prozessraum ausgebracht und in die Schleusenkammer überführt werden, etwa mit einem pinselartigen Gegenstand oder dgl. Hierzu ist die Schleusenkammer jedoch zuvor mit Schutzgas, z. B. Argon, gespült worden, und zwar bei geschlossenen Schleusenkammertüren, wonach dann die Schleusenkammertür zu dem ebenfalls Schutzgasatmosphäre aufweisenden Prozessraum geöffnet wurde, um das Pulver in die Schleusenkammer einzubringen. Das Pulver kann dann in einen in der Schleusenkammer befindlichen oder an der Schleusenkammer angeschlossenen, ebenfalls mit Schutzgas gespülten Behälter übergeben werden, der danach zu verschließen ist. Das so rückgewonnene Pulver kann dann ggf. nach Aufbereitung durch Siebung etc. für einen weiteren Bauprozess genutzt werden.

Die Schleusenkammer kann ferner auch dazu genutzt werden, jeweilige Substratplatten auszutauschen, auf denen die Formkörper aufgebaut werden.

Bevorzugte Weiterbildungen des obigen Erfindungsaspektes sind in den Unteransprüchen angegeben.

Eine bevorzugte Ausführungsform der Erfindung ist in Anspruch 9 angegeben, wonach die Vorrichtung nach der Erfindung in der Weise ausgestaltet ist, dass sie eine Pulverrückgewinnungseinrichtung zur Rückgewinnung von nicht verbrauchtem Werkstoffpulver aus dem Prozessraum aufweist, die eine Pulverausbringeinrichtung zum Ausbringen von Pulver aus dem Prozessraum und eine Pulversammeleinrichtung zum Sammeln des aus dem Prozessraum ausgebrachten Pulvers aufweist, wobei die Pulverrückgewinnungseinrichtung so gestaltet und an den Prozessraum angeschlossen ist, dass die Pulverrückgewinnung in einem nach außen abgeschlossenen Bereich, insbesondere vollständig in Schutzgasatmosphäre, durchführbar ist.

Bevorzugt ist auch eine Ausführungsform der Erfindung, bei der die Pulverausbringeinrichtung eine Pulverabsaugeinrichtung umfasst. Die Pulverabsaugeinrichtung kann z. B. einen in den Prozessraum hineinragenden Saugrüssel aufweisen, so dass es möglich ist, Pulver aus dem Prozessraum abzusaugen und zurückzugewinnen, ohne es mit Außenluft in Kontakt zu bringen. Das Pulver kann in einem an die Schutzgasatmosphäre angeschlossenen Behälter gesammelt werden und bedarfsweise für einen neuen Bauprozess eines Formkörpers wiederverwendet werden. Im Falle der Verwendung verschiedener Pulver kann es vorgesehen sein, dass die Pulver separat abgesaugt werden können, so dass eine Durchmischung verschiedener Pulver verhindert wird. Der Saugrüssel kann flexibel sein und mittels einer Handhabungsvorrichtung in dem Prozessraum manipuliert werden, um die Saugrüsselöffnung nahe an das abzusaugende Pulver heranzuführen. Insbesondere kann ein solcher Saugrüssel auch zum Absaugen von Prozessrauch und Schutzgas während des Bauprozesses genutzt werden. Weiterbildungen dieser Ausführungsformen der Erfindung sind insbesondere in den Unteransprüchen 10 - 15 angegeben. Insbesondere sei darauf hingewiesen, dass die Pulverrückgewinnungseinrichtung, wie auch der Prozessraum in einen Schutzgaskreislauf integriert sein können, welcher Filterelemente und Pulverabscheider enthält, so dass aus der Pulverrückgewinnungseinrichtung bzw. aus dem Prozessraum abgesaugtes Schutzgas nach Filterung wieder in die Pulverrückgewinnungseinrichtung bzw. den Prozessraum eingebracht wird.

Gemäß einer bevorzugten Ausgestaltung der Erfindung ist die Schutzgaszuleitungs- und -ableitungseinrichtung für den Prozessraum mit einem an einem Schutzgasabsauganschluss einer Pumpe angeschlossenen und in den Prozessraum hineinragenden Saugrüssel oder dgl. zum Absaugen von Schutzgas und/oder von Pulver aus dem Prozessraum ausgestattet, wobei z. B. in einer Verbindungsleitung zwischen dem Saugrüssel und der Pumpe eine Pulver aus dem abgesaugten Medium abscheidende Filtereinrichtung vorgesehen sein kann.

Der oben schon angesprochene Saugrüssel kann mit Werkzeugen, insbesondere Reinigungswerkzeugen kombiniert sein, etwa mit einem Pulverbürstenelement in der Nähe der Saugöffnung. Ferner kann an der Saugöffnung ein Vorsieb angeordnet sein.

Gemäß Anspruch 16 wird vorgeschlagen, bei einer Vorrichtung nach der Erfindung in dem Prozessraumgehäuse mehrere, gesondert voneinander angeordnete Träger für den Schichtenaufbau mehrerer Formkörper vorzusehen und die Pulverschichtpräparierungseinrichtung mit den einzelnen Trägern zugeordneten Pulverreservoirs zur Bereitstellung von Pulver für den jeweiligen Bauprozess auszustatten. Es ist dabei sichergestellt, dass sich die verwendeten Pulver nicht vermischen.

Die erfindungsgemäße Vorrichtung erlaubt somit die Herstellung mehrerer Formkörper nebeneinander in einem Prozessraumgehäuse und insbesondere unter einer gemeinsamen Schutzgasatmosphäre. Die auf den einzelnen Trägern herzustellenden Formkörper können gleich oder unterschiedlich sein. Insbesondere können die Formkörper aus verschiedenen Pulvermaterialien hergestellt werden, da jedem einzelnen Träger ein eigenes Pulverreservoir der Pulverschichtpräparierungseinrichtung zugeordnet ist.

Bevorzugte Weiterbildungen der letztgenannten Ausführungsform gemäß Anspruch 16 sind in den abhängigen Ansprüchen 17 - 27 angegeben.

Es sei darauf hingewiesen, dass die einzelnen Erfindungsaspekte im Wesentlichen beliebig miteinander kombiniert werden können.

Ausführungsbeispiele der Erfindung werden im Folgenden unter Bezugnahme auf die Figuren näher erläutert.
- Fig. 1: zeigt in einer perspektivischen Darstellung ein erstes Ausführungsbeispiel der Erfindung.
- Fig. 2: zeigt unter Weglassung von Außengehäusewänden den Bodenbereich der Prozesskammer des Ausführungsbeispiels nach Fig. 1 aus einer Perspektive, wie sie in Fig. 1 mit dem Pfeil II angedeutet ist.
- Fig. 3: zeigt das Ausführungsbeispiel aus Fig. 1 in einer perspektivischen Ansicht von unten.
- Fig. 4: zeigt ein zweites Ausführungsbeispiel nach der Erfindung in teils schematischer Darstellung.

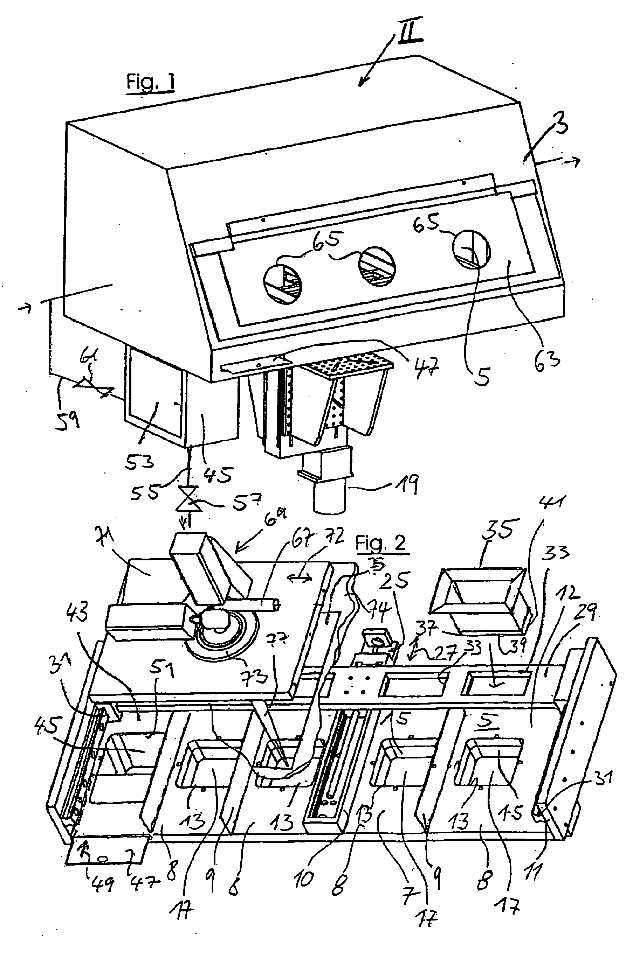

In Fig. 1 ist im Wesentlichen das Außengehäuse 3 einer Vorrichtung zur Herstellung von Formkörpern erkennbar. Das Außengehäuse 3 umgibt einen Prozessraum 5, dessen Bodenbereich 7 in Fig. 2 erkennbar ist. Der Bodenbereich 7 ist in vier Prozessraumabteile 8 durch vertikale Trennwände 9 bzw. 10 bzw. 11 unterteilt. In jedem Prozessraumabteil 8 ist die Bodenplatte 12 mit einer nach unten durchgehenden Öffnung 13 versehen, an der sich jeweils ein Bauzylinder 15 an der Unterseite der Bodenplatte 12 fluchtend anschließt. Die Bauzylinder 15 enthalten einen jeweiligen kolbenartigen Träger 17 für den Schichtaufbau der jeweiligen herzustellenden Formkörper.

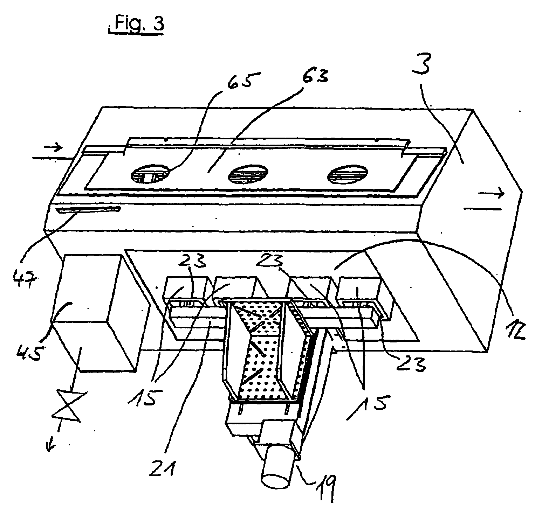

Die Träger 17 sind im Beispielsfall 2 mittels einer gemeinsamen Vertikalantriebseinheit 19 simultan in den Bauzylindern 15 vertikal verlagerbar. In Fig. 3 ist eine Querstange 21 erkennbar, welche von der Linearantriebseinheit 19 gesteuert vertikal bewegt werden kann. Vermittels der an dieser Querstange 21 fixierten und von unten her axial in die Bauzylinder 15 hineinragenden Trägerstangen 23 sind die Träger 17 mit der Querstange 21 verbunden. Die Träger 17 sind abdichtend in den Bauzylindern 15 geführt, so dass aus den Bauzylindern 15 kein Schutzgas während des Bauprozesses aus dem Prozessraum 5 entweichen kann.

In Fig. 2 sind Elemente einer Pulverschicht-Präparierungseinrichtung mit zugehöriger Pulverabgabevorrichtung erkennbar, nämlich ein mittels der Spindeltriebvorrichtung 25 in Richtung des Pfeiles 27 über die Träger 17 hinweg hin- und herbewegbarer Pulverreservoirhalter 29 und Linearführungen 31 für den Halter 29. Der Halter 29 weist Einstecköffnungen 33 für Wechselbehälter 35 auf, welche als Pulverreservoirs dienen. Im Beispielsfall ist nur ein Wechselbehälter 35 stellvertretend für üblicherweise vier Wechselbehälter dargestellt, die normalerweise in den Einstecköffnungen 33 wahlweise auswechselbar aufgenommen sind. Die Wechselbehälter 35 sind so dimensioniert, dass sie jeweils ein Vorratsvolumen an Pulver aufnehmen können, welches für die Präparation einer Vielzahl von Pulverschichten vorbestimmter Dicke ausreicht. Nicht zeichnerisch dargestellt ist eine Pulvernachfülleinrichtung, welche dazu dient, die Wechselbehälter 35 in einer vorbestimmten Parkstellung des bewegbaren Halters 29 innerhalb des Prozessraumgehäuses automatisch mit Pulver aus externen Pulverquellen zu beschicken, falls dies während des Bauprozesses erforderlich sein sollte.

Die Wechselbehälter 35 weisen an ihren unteren Enden Pulverabstreifelemente 37 auf, die sich quer zur Bewegungsrichtung des Halters 29 erstrecken. Die Pulverabstreifelemente 37 können z. B. Bereiche eines die untere Ausgabeöffnung 39 der Wechselbehälter 35 umlaufend begrenzenden Randes 41 des Wechselbehälters 35 sein und z. B. aus einem Kunststoff, etwa Silikon, bestehen. Während des Schichtenpräparationsbetriebes liegt der untere Rand 41 des Wechselbehälters 35 auf der Bodenplatte 12 auf, so dass die Pulverabstreifelemente 37 eine jeweilige Pulverschicht auf einem betreffenden Träger 17 im zugehörigen Bauzylinder auf Höhe der Oberseite der Bodenplatte 12 nivellieren kann.

In anderen Ausführungsformen können die Pulverabstreifelemente gesondert von den Wechselbehältern vorgesehen sein.

Der Halter 29 befindet sich oberhalb der Trennwände 9 zwischen Prozessraumabteilen 8. Die Trennwände 9 dienen dazu, zu verhindern, dass Pulver von einem Prozessraumabteil 8 in ein anderes Prozessraumabteil 8 gelangt. Die Prozessraumabteile 8 sind im Übrigen jedoch nicht hermetisch gegeneinander separiert, so dass eine gemeinsame Schutzgasatmosphäre für die Prozessraumabteile 8 aufgebaut bzw. aufrechterhalten werden kann.

Gemäß Fig. 2 ist in dem Prozessraum außer den vier Prozessraumabteilen noch ein erfindungsgemäßes Schleusenabteil 43 zu erkennen. Das Schleusenabteil 43 mit der Schleusenkammer 45 kann genutzt werden, um von außen auf den Prozessraum 5 zuzugreifen, ohne die Schutzgasatmosphäre im Prozessraum mit Außenluft zu vermischen. So ist es z. B. möglich, einen fertig gestellten Formkörper von einem Träger 17 mittels noch zu erläuternder Hilfsmittel zu entfernen und in die Schleusenkammer 45 zu legen, wobei vorher dafür Sorge getragen worden ist, dass auch in der Schleusenkammer 45 Schutzgasatmosphäre herrscht. Nach dem Einlegen des Formkörpers in die Schleusenkammer 45 kann diese prozessraumseitig geschlossen werden, indem die Schieberblende 47 in Richtung des Pfeiles 49 in die die Öffnung 51 verschließende Schließstellung verschoben wird. Danach kann ggf. der Bauprozess weiterer Formkörper im Prozessraum 5 fortgesetzt werden.

Die Schleusenkammer 45 weist auch eine Außentür 53 (vgl. Fig. 1) auf. Nach Öffnen dieser Außentür 53 kann ein in der Schleusenkammer 45 befindlicher Gegenstand nach außen entnommen werden.

Die dabei in die Schleusenkammer 45 eindringende Außenluft ist nach Wiederverschließen der Außentür 53 durch Spülen der Kammer 45 mit Schutzgas wieder zu entfernen. Hierzu weist die Schleusenkammer 45 eine Entlüftungsleitung 55 mit Ventil 57 und eine Schutzgaszuführungsleitung 59 mit Ventil 61 auf. Zum Spülen der Schleusenkammer 45 wird bei geschlossenen Türen 47, 53 Schutzgas mittels der Schutzgasleitung 59 in die Schleusenkammer 45 eingelassen, wobei das Ventil 57 der Entlüftungsleitung 55 über eine hinreichend lange Zeit geöffnet bleibt, so dass Luft aus der Schleusenkammer 45 von dem nachströmenden Schutzgas nach außen hin verdrängt werden kann. Zum Abschließen des Spülvorgangs wird dann das Ventil 57 wieder geschlossen, und es kann die Schleusentür 47 zum Prozessraum 5 hin bei Bedarf wieder geöffnet werden. Es hätte im Übrigen unter Verwendung der Schleusenkammer 45 auch ein Gegenstand von außen in den Prozessraum 5 eingebracht werden können, wobei dieser Gegenstand während der Schleusenkammerspülung in der Schleusenkammer 45 aufzubewahren gewesen wäre und schließlich nach Beendigung des Spülvorgangs und Öffnen der Tür 47 dann in den Prozessraum 5 hätte übernommen werden können. Hierbei hätte es sich z. B. um einen Wechselbehälter 35 mit nach außen versiegeltem Pulvervorrat handeln können, wobei die Versiegelung des Behälters 35 dann unter Schutzgasatmosphäre im Prozessraum 5 hätte aufgehoben werden können. Dem Aspekt der Verwendung von Wechselbehältern, die unter Schutzgasatmosphäre oder im Vakuum mit Pulver gefüllt und nach außen versiegelt worden sind, bei der Herstellung von Formkörpern nach dem Verfahren des selektiven Lasersinterns oder Laserschmelzens kann eigenständige erfinderische Bedeutung zukommen.

Wie die vorstehenden Erläuterungen erkennen lassen, kann die Schleusenkammer 45 dazu genutzt werden, das Werkstoffpulver so zu handhaben, dass es nicht mit Luft bzw. der Außenatmosphäre in Kontakt kommt. Unter einem nachstehend noch in Bezug auf das zweite Ausführungsbeispiel näher erläuterten Gesichtspunkt der Erfindung kann als weitere Maßnahme bei dem Ausführungsbeispiel nach den Fig. 1-3 vorgesehen sein, dass auch die Pulverentfernung aus dem Prozessraum so erfolgt, dass das Pulver nicht mit Luft in Kontakt kommt. Die Pulverentfernung erfolgt dabei vorzugsweise durch Absaugen unter Verwendung von Ableitungen, welche Schutzgas enthalten. Die Abscheidung des Pulvers aus einem Schutzgaskreislauf erfolgt mittels einer Pulverfalle bzw. eines entsprechenden Filters, wobei das Pulver dann unter Luftausschluss in einem Behälter zur Wiederverwendung gesammelt wird.

Wie in den Fig. 1 und 3 erkennbar, weist das Prozessraumgehäuse 3 z. B. in einer bedarfsweise zu öffnenden Frontklappe 63 Handschuhzugriffsöffnungen 65 auf. An jeder dieser Handschuhzugriffsöffnungen 65 ist ein in den Prozessraum hineinzustülpender Handschuh (nicht gezeigt) vorgesehen, welcher die Öffnung 65 nach außen hin gasdicht abschließt. Eine Bedienungsperson kann somit durch eine Öffnung 65 hindurch in einen Handschuh eingreifen und somit in dem Prozessraum 5 und in der Schleusenkammer 45 von außen her unter Aufrechterhaltung der Schutzgasatmosphäre Gegenstände manipulieren, also etwa einen fertig gestellten Formkörper von einem Träger 17 in die Schleusenkammer 45 einlegen oder Reinigungsarbeiten oder Umrüstarbeiten vornehmen.

Bei dem Ausführungsbeispiel nach den Fig. 1-3 ist für den Betrieb jedes der Prozessraumabteile 8 eine gemeinsame Bestrahlungseinrichtung vorgesehen. Hierzu gehört ein Laser (nicht gezeigt), welcher über eine Lichtleitfaser bzw. über ein Lichtleitfaserbündel 67 Laserstrahlung für eine Strahlablenkeinrichtung 69 bereitstellt. Als Strahlablenkeinrichtung 69 ist im Beispielsfall eine X-Y-Scannereinrichtung an einem gesteuert und geführt in Richtung des Pfeils 72 verfahrbaren Rahmen 71 vorgesehen ist. Mit 73 ist in Fig. 2 eine an dem Rahmen vorgesehene f-Theta-Linse bezeichnet, mittels welcher der von der Scannereinrichtung 69 abgelenkte Laserstrahl auf die jeweils zuletzt präparierte Pulverschicht auf einem betreffenden Träger 17 fokussiert wird.

Anstelle einer solchen Scanneranordnung könnte als Ablenkeinrichtung z. B. auch eine steuerbare Mikrospiegelanordnung oder ggf. eine steuerbare selbstleuchtende Lichtquellenmatrix, etwa eine integrierte Lasermatrix, vorgesehen sein.

Anstelle eines Lasers als Strahlungsquelle oder zusätzlich könnte im Rahmen der Erfindung auch eine andere Strahlungsquelle eingesetzt werden, etwa eine Elektronenstrahlungsquelle oder lonenstrahlungsquelle.

Die Linearführungsmittel für die Antriebseinrichtung des optischen Rahmens 71 sind in den Figuren nicht dargestellt. Es sei aber darauf hingewiesen, dass im Beispielsfall das Rahmenelement 71 mit der Ablenkeinrichtung 69 oberhalb einer Gehäusezwischenwand 74 angeordnet und verfahrbar ist. Die Gehäusezwischenwand 74 ist nur ausbruchsweise angedeutet und weist ein Kopplungsfenster 75 auf, durch die hindurch die Laserstrahlung 77 in den von der Zwischenwand 74 nach oben abgeschlossenen Prozessraum 5 gelangt.

Insbesondere falls in den einzelnen Prozessraumabteilen 8 mit unterschiedlichen Pulvermaterialien gearbeitet wird, kann es nützlich sein, wenn die Strahlungsintensität der Laserstrahlung pro Abteil individuell einstellbar ist, um unterschiedlichen Materialeigenschaften der Pulver gerecht zu werden.

In entsprechender Weise kann es im Rahmen der Erfindung auch vorgesehen sein, dass die Bestrahlungswellenlänge variierbar ist und z. B. ein spektral durchstimmbarer Laser oder ggf. mehrere Laser unterschiedlicher Emissionswellenlängen für die Bestrahlung der Pulverschichten in den verschiedenen Prozessraumabteilen 8 verwendet werden.

Das Ausführungsbeispiel nach den Fig. 1-3 zeichnet sich durch einen einfachen und vergleichsweise preiswerten Aufbau aus und erlaubt das Herstellen mehrerer Formkörper. Die Formkörper können gleiche oder ungleiche Formen haben. Überdies können die Formkörper aus gleichen oder aus ungleichen Materialien gefertigt werden. Es wird somit mit einfachen apparativen Mitteln eine große Flexibilität erreicht. Insbesondere erlaubt die Erfindung die ökologische und ökonomische Handhabung und Verarbeitung von Pulvern, die nicht mit Luft in Verbindung kommen sollten, also etwa die Verarbeitung von Titanpulver oder Aluminium.

Die Herstellung von Formkörpern kann mit dem Ausführungsbeispiel nach den Fig. 1-3 z. B. so erfolgen, dass zunächst die Träger 17 bis auf das Maß der Soll-Schichtdicke der ersten zu bestrahlenden Schicht an die obere Oberfläche der Bodenplatte 12 mittels der Elevatoreinrichtung 19, 21, 23 vertikal herangeführt wird, wonach dann die Pulverschicht-Präparierungseinrichtung in Betrieb gesetzt wird, so dass der Halter 29 mit den Pulverreservoirs 35 und den daran befindlichen Pulverabstreifelementen 37 über die Bauzylinderöffnungen 13 hinweg bewegt wird. Dabei gelangt Pulver aus den unteren Austrittsöffnungen 39 der Pulverreservoirs 35 auf die Träger 17, wobei das Pulver von dem betreffenden Pulverabstreifelement 37 glatt gestrichen und auf der Ebene der Oberseite der Bodenplatte 12 novelliert wird.

Nach einem solchen Pulverschicht-Präparierungsvorgang kann dann die Bestrahlung der Pulverschichten mit der Bestrahlungseinrichtung 67, 69 erfolgen. Dabei wird der optische Rahmen 71 nacheinander über die betreffenden Prozessraumabteile 8 positioniert, um einen jeweiligen Bestrahlungsvorgang nach Maßgabe von CAD-Daten oder ggf. davon abgeleiteten Daten des Formkörpers in der jeweiligen Pulverschicht durchzuführen. Es entsteht somit durch Umschmelzen oder ggf. Versintern des Werkstoffpulvers die erste Schicht des jeweiligen Formkörpers. Danach können die Träger 17 um das Maß einer weiteren Schichtdicke in den Bauzylindern 15 abgesenkt werden, so dass durch eine nachfolgende Fahrt der Pulverabgabevorrichtung 29, 35 über die Bauzylinder 15 hinweg eine neue Pulverschicht präpariert werden kann, die sodann in einem Bestrahlungsvorgang selektiv umgeschmolzen bzw. versintert wird, so dass eine zweite Schicht des Formkörpers entsteht. Die Vorgänge der Schichtenpräparation des Bestrahlens können dann wechselweise durchgeführt werden, bis die Formkörper fertig gestellt sind. Der Steuerungscomputer ist in den Zeichnungen nicht dargestellt.

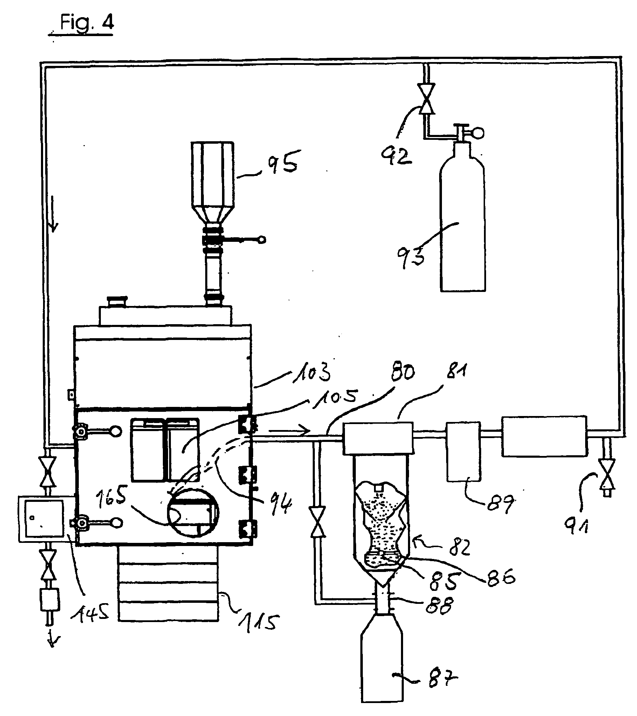

Unter Bezugnahme auf das Ausführungsbeispiel gemäß Fig. 4 wird nachstehend ein weiterer Erfindungsaspekt erläutert, der auch bei dem bereits erörterten Ausführungsbeispiel nach den Fig. 1-3 verwirklicht sein kann. Dieser weitere Erfindungsaspekt betrifft insbesondere die Möglichkeit der Pulverrückgewinnung aus dem Prozessraum, ohne dass das Pulver mit der Außenluft in Kontakt kommt.

In Fig. 4 ist ein Prozessraumgehäuse 103 einer Vorrichtung zur Herstellung von Formkörpern durch schichtweises Aufbauen aus pulverförmigem Werkstoff dargestellt, welche einen einzelnen Prozessraum 105 mit einem Bauzylinder 115 zum Absenken eines Trägers umfasst, wenngleich in Varianten der Erfindung auch mehrere Prozessraumabteile in dem Gehäuse 103 vorhanden sein können, wie dies in dem ersten Ausführungsbeispiel der Fall ist. Wie das erste Ausführungsbeispiel weist auch das Ausführungsbeispiel nach Fig. 4 eine Schleusenkammer 145 auf, welche zum Prozessraum 105 hin und nach außen hin wahlweise geöffnet und geschlossen werden kann.

Bei dem Ausführungsbeispiel nach Fig. 4 ist in einem Schutzgasableitungszweig 80 eine Pulverfalle in Gestalt eines Filters 81 vorgesehen, welcher aus dem Prozessraum 105 abgesaugtes Pulver aus dem im Wesentlichen geschlossenen Schutzgas-Kreislauf, z. B. Argon-Kreislauf, zu einer Pulverrückgewinnungseinrichtung 82 mit einem ggf. zur automatischen Reinigung um die Achse 85 bedarfsweise drehbaren Sieb 86 abscheidet. Das von dem Sieb 86 gesiebte Pulver wird dann unter Luftausschluss in den Auffangbehälter 87 rieseln. Bei 88 sind z. B. Schleusenmittel vorgesehen, welche einen Wechsel des Behälters 87 ermöglichen, ohne dass Luft in den Behälter bzw. in die Pulverrückgewinnungseinrichtung 82 einströmt.

Mit 89 ist ein zweiter Filter bezeichnet, der dem Pulverfallenfilter 81 im Schutzgaskreislauf nachgeschaltet ist und dafür sorgen soll, dass der Pumpe 90 keine Pulverreste, die ggf. den Pulverfallenfilter 81 passiert haben, erreichen. Die Pumpe 90 dient als Umwälzpumpe für den Schutzgaskreislauf. Bei 91 ist ein Entlüftungsventil dargestellt. Über das Ventil 92 kann Schutzgas aus dem Vorratsbehälter 93 in den Schutzgaskreislauf eingespeist werden.

Mit 94 ist ein an der Leitung 80 angeschlossener und sich in den Prozessraum erstreckender Saugrüssel gekennzeichnet, welcher vorzugsweise flexibel und von außen handhabbar ist, insbesondere mittels eines durch die Handschuheingriffsöffnung 165 in den Prozessraum 105 einzustülpenden Handschuhs, welcher die Öffnung 165 nach außen hin gasdicht abschließt. Die Bedienungsperson kann die Öffnung des Saugrüssels 94 nahe an abzusaugendes Pulver in dem Prozessraum 105 heranführen und so den Prozessraum 105 weitgehend von Pulver befreien. In alternativen Varianten kann es vorgesehen sein, dass ein ggf. starrer Saugstutzen permanent in Absaugstellung positioniert ist, wobei er jedoch über ein Sperrventil mit der Rücklaufleitung 80 verbunden ist. Während des normalen Bauprozesses ist dieses Sperrventil dann geschlossen zu halten, wobei eine gesonderte Schutzgasableitung zwischen dem Prozessraum 105 und der Rücklaufleitung 80 vorzusehen wäre.

Bei dem handhabbaren flexiblen Saugrüssel 94 liegt demgegenüber der Vorteil vor, dass er während des normalen Bauprozesses einfach aus der unmittelbaren Nähe des Pulvers entfernt bleibt und nur bei Bedarf zum Pulverabsaugen geführt wird. Während des Bauprozesses dient er als Leitungselement für Schutzgas in dem Schutzgaskreislauf und zur Absaugung von evtl. auftretendem Prozessrauch.

Der Vollständigkeit halber sei noch darauf hingewiesen, dass mit 95 in Fig. 4 ein externer Pulverbehälter vorgesehen ist, aus dem ein betreffendes Pulverreservoir im Inneren der Prozesskammer 105 gespeist werden kann. Dabei wird Pulver aus dem externen Pulverbehälter über eine Schleuse, die mit Argon gespült wird, in den Haupttank gefüllt. Dadurch wird gewährleistet, dass kein Sauerstoff in den Haupttank gelangen kann.

Nicht erkennbar in Fig. 4 sind eine Bestrahlungseinrichtung, die sich in dem Gehäuse 103 befindet, und der Steuerrechner.

Eine zeichnerisch nicht dargestellte Ausführungsvariante der Erfindung mit Pulverrückgewinnung umfasst zusätzlich zu einem Prozessrauchabsaug- und Filtersystemein eigenes Pulverabsaugsystem, welches Pulver aus dem Prozessraum absaugt und einer Siebmaschine zuführt. Die Siebmaschine umfasst ein Pulversieb, auf welches das angesaugte Pulver auftrifft. Eine mit Borsten bzw. Zinken von oben her an dem Sieb abgestützte Bürsten- bzw. Rechenanordnung bewegt sich relativ zu dem Sieb, um das Durchsieben von Pulver zu beschleunigen. Grobkörnige Pulverteile bleiben im Sieb zurück und können gelegentlich bei Reinigungsarbeiten entfernt werden. Das Sieben findet in Schutzgasatmosphäre statt. Ebenfalls das Auffangen des durchgesiebten Pulvermaterials in einem Behälter. Ggf. kann das durchgesiebte Material auch mittels einer Pumpeinrichtung abgepumpt und der weiteren Bearbeitung bzw. Verpackung zugeführt werden.

Vorzugsweise ist auch die Siebmaschine mit einer Handschuhöffnung von außen zugänglich, ohne die Schutzgasatmosphäre aufheben zu müssen. Auf diese Weise kann z.B. das Sieb gereinigt werden. Die Relativbewegung zwischen Sieb und daran abgestützten Bürstenborsten bzw. Rechenzinken kann durch Bewegen des Siebs oder/und durch Bewegen der Bürsten bzw. Rechen mittels geeigneter Antriebe erzeugt werden.

Die Pulverrückgewinnungseinrichtungen nach der Erfindung, und so auch die vorstehend angesprochene Siebmaschine können dazu eingerichtet sein, dass Pulverauffangbehälter mit rückgewonnenem Pulver in Schutzgasatmosphäre wieder verschließbar sind. Zum Wechseln der Pulverauffangbehälter bietet sich wiederum eine mittels Schutzgas spülbare Schleuse an, wie sie oben bereits für den Prozessraum erläutert wurde.

Im Rahmen der Erfindung sind diverse Varianten der vorstehend erläuterten Ausführungsformen denkbar. So kann es vorgesehen sein, dass bei einer Ausführungsform mit mehreren Prozessraumabteilen jedem einzelnen Prozessraumabteil oder einer Gruppe von Prozessraumabteilen Pulverschichtpräparierungsmittel vorgesehen sind, die separat von den jeweils anderen Pulverschichtpräparierungsmitteln der Pulverschichtpräparierungseinrichtung steuerbar sind. Bei einer solchen Ausführungsform der Erfindung ist es möglich, in einem Prozessraumabteil die Pulverschichtpräparation durchzuführen, während in einem anderen Prozessraumabteil gleichzeitig der Bestrahlungsvorgang einer Schicht erfolgt.

Es können ferner Heizmittel vorgesehen sein, welche das durch Bestrahlen umzuschmelzende Pulver erhitzen. Bei diesen Heizmitteln kann es sich um elektrische Widerstandsheizungen oder/und um Strahlungsheizungen handeln.

## Patentansprüche

1. Vorrichtung zur Herstellung von Formkörpern durch schichtweises Aufbauen aus pulverförmigem, insbesondere metallischem oder keramischem Werkstoff, mit einem Prozessraumgehäuse (3), einer Schutzgaszuleitungs- und -ableitungseinrichtung zur Erzeugung und Aufrechterhaltung einer Schutzgasatmosphäre, insbesondere Argonatmosphäre im Prozessraum (5), einem Träger (17) für den Schichtaufbau, einer Bestrahlungseinrichtung (67, 69, 73) zur Bestrahlung der jeweils auf dem Träger (17) präparierten Werkstoffpulverschicht in einem dieser Schicht zugeordneten Querschnittsbereich des Modells des Formkörpers mit einer Strahlung, insbesondere fokussierten Laserstrahlung, die das Werkstoffpulver in diesem Querschnittsbereich durch Erhitzen zum Verschmelzen oder ggf. zum Versintern bringt, einer Pulverschichtpräparierungseinrichtung (29, 35, 37) zur Präparierung der jeweils folgenden Werkstoffpulverschicht auf der zuletzt bestrahlten oder aufgetragenen Schicht, und
wenigstens einer an den Prozessraum (5; 105) angeschlossenen Schleusenkammer (45; 145) mit einer wahlweise zu schließenden und zu öffnenden Tür (47) zum Prozessraum (5; 105), wobei die Schleusenkammer (45; 145) an eine Schutzgaszuleitungs- und -ableitungseinrichtung (55, 59) angeschlossen ist, so dass bedarfsweise eine Schutzgasatmosphäre in der Schleusenkammer (45; 145) erzeugt werden kann,
**dadurch gekennzeichnet,**
**dass** die an den Prozessraum (5; 105) angeschlossene Schleusenkammer (45; 145) weiter eine wahlweise zu schließende und zu öffnende Tür (53) zu einem von dem Prozessraum (5; 105) separierten Umgebungsbereich hat, und
wenigstens eine Handhabungsvorrichtung in bzw. an dem Prozessraumgehäuse (5; 105) oder/und in bzw. an der Schleusenkammer (45; 145) vorgesehen und so gestaltet ist, dass sie einen Zugriff auf das Prozessrauminnere - und auf das Innere der Schleusenkammer (45; 145) unter Aufrechterhaltung einer zuvor darin erzeugten Schutzgasatmosphäre ermöglicht,
wobei die Handhabungsvorrichtung
- einen steuerbaren Roboterarm in dem Prozessraumgehäuse oder/ und in der Schleusenkammer oder/und
- wenigstens einen durch eine Öffnung (65; 165) im Prozessraumgehäuse (5; 105) oder in einer Schleusenkammeraußenwand erreichbaren und die Öffnung (65; 165) nach außen gasdicht abschließenden Handschuh, mittels welchem eine Bedienungsperson in den Prozessraum (5; 105) und in die Schleusenkammer (45; 145) eingreifen kann, umfasst.

2. Vorrichtung nach einem der vorhergehenden Ansprüche,
**dadurch gekennzeichnet,**
**dass** die Pulverschichtpräparierungseinrichtung wenigstens ein Pulverreservoir (35) zur Bereitstellung von Pulver für den jeweiligen Bauprozess und eine das Pulverreservoir (35) umfassende Pulverabgabevorrichtung aufweist, die einen über den Träger (17) hinweggeführt hin- und herbewegbaren und das Pulverreservoir (35) mitführenden Halter umfasst.

3. Vorrichtung nach Anspruch 2,
**dadurch gekennzeichnet,**
**dass** die Pulverschichtenpräparierungseinrichtung eine Schichtenglättungseinrichtung mit wenigstens einem Pulverabstreifelement (37) in Zuordnung zu dem Träger (17) umfasst, wobei das Pulverabstreifelement zusammen mit der Pulverabgabevorrichtung an einem gemeinsamen Halter (29) bewegbar sind.

4. Vorrichtung nach Anspruch 3,
**dadurch gekennzeichnet,**
**dass** das Pulverreservoir (35) ein Wechselbehälter ist und dass der Wechselbehälter in Einsatzöffnungen (33) des bewegbaren Halters (29) auswechselbar aufgenommen ist.

5. Vorrichtung nach Anspruch 3 oder 4,
**dadurch gekennzeichnet,**
**dass** das Pulverreservoir (35) an seinem unteren Ende das Pulverabstreifelement (37) aufweist.

6. Vorrichtung nach einem der vorhergehenden Ansprüche 2 bis 5,
**dadurch gekennzeichnet,**
**dass** das Pulverreservoir (35) jeweils ein Vorratsvolumen an Pulver aufnehmen kann, welches für die Präparation einer Vielzahl von Pulverschichten vorbestimmter Dicke, insbesondere für die Herstellung des kompletten Formkörpers ausreicht.

7. Vorrichtung nach einem der Ansprüche 2 bis 6 mit einem Wechselbehälter als Pulverreservoir (35),
**dadurch gekennzeichnet,**
**dass** der Wechselbehälter so bemessen ist, dass er durch die Schleusenkammer (45) hindurch in den Prozessraum (5) einsetzbar ist bzw. aus dem Prozessraum (5) entnehmbar ist.

8. Vorrichtung nach einem der Ansprüche 2 bis 7 mit einem jeweiligen Wechselbehälter (35) als Pulverreservoir,
**dadurch gekennzeichnet,**
**dass** die Wechselbehälter (35) im gefüllten Neuzustand gasdicht versiegelt sind und dass die Versiegelung im Prozessraum (5) in Schutzgasatmosphäre aufgehoben werden kann.

9. Vorrichtung nach einem der vorhergehenden Ansprüche,
**dadurch gekennzeichnet,**
**dass** sie eine Pulverrückgewinnungseinrichtung zur Rückgewinnung von nicht verbrauchtem Werkstoffpulver aus dem Prozessraum (105) aufweist, wobei die Pulverrückgewinnungseinrichtung eine Pulverausbringeinrichtung (81, 82) zum Ausbringen von Pulver aus dem Prozessraum (105) und eine Pulversammeleinrichtung (87, 88) zum Sammeln des aus dem Prozessraum (105) ausgebrachten Pulvers aufweist, wobei die Pulverrückgewinnungseinrichtung so gestaltet und an den Prozessraum (105) angeschlossen ist, dass die Pulverrückgewinnung in einem nach außen abgeschlossenen Bereich, insbesondere vollständig in Schutzgasatmosphäre, durchführbar ist.

10. Vorrichtung nach Anspruch 9,
**dadurch gekennzeichnet,**
**dass** die Pulverausbringeinrichtung eine Pulverabsaugeinrichtung umfasst.

11. Vorrichtung nach Anspruch 10,
**dadurch gekennzeichnet,**
**dass** die Pulverabsaugeinrichtung einen in den Prozessraum hineinragenden Saugrüssel (94) aufweist.

12. Vorrichtung nach Anspruch 11,
**dadurch gekennzeichnet,**
**dass** die Saugöffnung des Saugrüssels (94) zu verschiedenen Stellen innerhalb des Prozessraumes führbar ist.

13. Vorrichtung nach einem der Ansprüche 9 bis 12,
**dadurch gekennzeichnet,**
**dass** die Pulverrückgewinnungseinrichtung wenigstens eine der Pulversammeleinrichtung vorgeschaltete Filtereinrichtung aufweist.

14. Vorrichtung nach Anspruch 13,
**dadurch gekennzeichnet,**
**dass** die Filtereinrichtung wenigstens ein Pulversieb umfasst.

15. Vorrichtung nach einem der Ansprüche 9 bis 14,
**dadurch gekennzeichnet,**
**dass** die Schutzgaszuleitungs- und -ableitungseinrichtung einen an einem Schutzgasabsauganschluss einer Pumpe (90) angeschlossenen und in den Prozessraum (105) hineinragenden Saugrüssel (94) zum Absaugen von Schutzgas aus dem Prozessraum (105) umfasst, wobei der Saugrüssel (94) bedarfsweise als Element der Pulverausbringeinrichtung zum Absaugen von Pulver aus dem Prozessraum (105) nutzbar ist.

16. Vorrichtung nach Anspruch 3 oder nach einem darauf rückbezogenen vorhergehenden Anspruch,
**dadurch gekennzeichnet,**
**dass** in dem Prozessraumgehäuse (5) mehrere, gesondert voneinander angeordnete Träger (17) für den Schichtaufbau mehrerer Formkörper vorgesehen sind und dass die Pulverschichtpräparierungseinrichtung den einzelnen Trägern (17) zugeordnete Pulverreservoirs (35) zur Bereitstellung von Pulver für den jeweiligen Bauprozess umfasst.

17. Vorrichtung nach Anspruch 16,
**dadurch gekennzeichnet,**
**dass** in dem Prozessraum (5) wenigstens eine Trennwand (9) zur seitlichen Abgrenzung der Träger (17) voneinander vorgesehen ist.

18. Vorrichtung nach Anspruch 16 oder 17,
**dadurch gekennzeichnet,**
**dass** die Pulverschichtpräparierungseinrichtung eine die Pulverreservoirs (35) umfassende Pulverabgabevorrichtung aufweist, die einen über die Träger (17) hinweg mittels einer Antriebseinrichtung (25) geführt hin und her bewegbaren und die Pulverreservoirs (35) mitführenden Halter umfasst.

19. Vorrichtung nach Anspruch 18,
**dadurch gekennzeichnet,**
**dass** die Schichtenglättungseinrichtung Pulverabstreifelemente (37) in Zuordnung zu den einzelnen Trägern (17) umfasst, wobei die Pulverabstreifelemente zusammen mit der Pulverabgabevorrichtung an einem von der Antriebseinrichtung angetriebenen gemeinsamen Halter (29) bewegbar sind.

20. Vorrichtung nach Anspruch 19,
**dadurch gekennzeichnet,**
**dass** die Pulverreservoirs (35) Wechselbehälter sind und dass die Wechselbehälter in Einsatzöffnungen (33) des bewegbaren Halters (29) auswechselbar aufgenommen sind.

21. Vorrichtung nach einem der vorhergehenden Ansprüche 16 bis 20, **dadurch gekennzeichnet,**
**dass** jedes Pulverreservoir einen Pulverstandssensor aufweist.

22. Vorrichtung nach einem der vorhergehenden Ansprüche 16 bis 21,
**dadurch gekennzeichnet,**
**dass** die Pulverreservoirs (35) in einer vorbestimmten Parkstellung des bewegbaren Halters (29) innerhalb des Prozessraumgehäuses (5) automatisch mit Pulver aus den jeweiligen Pulverreservoirs zugeordneten externen Pulverquellen befüllbar sind.

23. Vorrichtung nach einem der vorhergehenden Ansprüche 16 bis 22,
**dadurch gekennzeichnet,**
**dass** jeder der Träger (17) in einem jeweiligen Bauzylinder (15) an und unterhalb der Bodenplatte des Prozessraumgehäuses (105) aufgenommen - und gesteuert vertikal verstellbar ist.

24. Vorrichtung nach Anspruch 23,
**dadurch gekennzeichnet,**
**dass** die Träger (17) mittels einer steuerbaren Elevatoreinrichtung (19, 21), welche einen allen Trägern gemeinsamen Verstellantrieb (19) aufweist, gemeinsam vertikal verstellbar sind.

25. Vorrichtung nach einem der vorhergehenden Ansprüche 16 bis 24,
**dadurch gekennzeichnet,**
**dass** für mehrere, insbesondere alle Träger (17) eine gemeinsame Bestrahlungseinrichtung (67, 69, 71) vorgesehen ist.

26. Vorrichtung nach Anspruch 25,
**dadurch gekennzeichnet,**
**dass** die Bestrahlungseinrichtung (67, 69, 71) eine über die Träger (17) hinweg verfahrbare und in jeweilige Betriebspositionen zur gesteuerten Pulverschichtenbestrahlung einstellbare Strahlablenkeinrichtung (69), insbesondere X-Y-Scannereinrichtung aufweist.

27. Vorrichtung nach einem der Ansprüche 16 bis 24,
**dadurch gekennzeichnet,**
**dass** jedem Träger eine eigene Bestrahlungseinrichtung zur gesteuerten Pulverschichtenbestrahlung zugeordnet ist.

## Claims

1. Device for producing moulded bodies by building up layers of powdered, in particular metallic or ceramic material, with a processing chamber housing (3), a protective gas supply and removal device for generating and maintaining a protective gas atmosphere, in particular an argon atmosphere in the processing chamber (5), a substrate (17) for the build up of layers, a radiation device (67, 69, 73) for radiating the respective prepared powdered material layer on the substrate (17) in a cross sectional area of the model of the moulded body assigned to the said layer with radiation, in particular focussed laser radiation, which causes the powdered material in this cross sectional area by heating to fuse together or possibly sinter, a powder layer preparation device (29, 35, 37) for preparing the respective subsequent material powder layer on the previously radiated or applied layer, and
at least one sluice chamber (45; 145) connected to the processing chamber (5; 105) with a door (47, 53) to the processing chamber (5; 105) that can be closed and opened, wherein the sluice chamber (45; 145) is connected to a protective gas supply and removal device (55, 59), so that if necessary a protective gas atmosphere can be generated in the sluice chamber (45; 145),
**characterised in that**
the sluice chamber (45; 145) connected to the processing chamber (5:105) also has a door (53) that can be closed or opened to a surrounding area separated from the processing chamber (5; 105) and at least one handling device is provided in or on the processing chamber housing (5; 105) and/or in or on the sluice chamber (45; 145) and is designed so that it allows access to the inside of the processing chamber - and to the inside of the sluice chamber (45; 145) while maintaining a protective gas atmosphere previously generated therein, whereby the handling device comprises
- a controllable robot arm in the processing chamber housing and/or in the sluice chamber and/or
- at least one glove accessible through an opening (65; 165) in the processing chamber housing (5; 105) or in a sluice chamber external wall which seals the opening (65; 165) from the outside in a gas-tight manner, by means of which glove an operator can reach into the processing chamber (5; 105) and/or the sluice chamber (45; 145).

2. Device according to one of the preceding claims, **characterised in that** the powder layer preparation device comprises at least one powder reservoir (35) for providing powder for the respective assembly process and a powder delivery device comprising the powder reservoir (35), which powder delivery device comprises a holder, which can be moved back and forth over the substrate (17) and carries the powder reservoir (35).

3. Device according to claim 2, **characterised in that** the powder layer preparation device comprises a layer smoothing device with at least one powder scraping element (37) intended for the substrate (17), whereby the powder scraping element together with the powder delivery device can be moved on a common holder (29).

4. Device according to claim 3, **characterised in that** the powder reservoir (35) is an exchangeable container and **in that** the exchangeable container is mounted in insertion openings (33) of the moveable holder (29).

5. Device according to claim 3 or 4, **characterised in that** the powder reservoir (35) at its lower end comprises the powder scraping element (37).

6. Device according to one of the preceding claims 2 to 5, **characterised in that** the powder reservoir (35) can hold respectively a supply of powder which is sufficient for the preparation of a plurality of powder layers of specific thickness, in particular for producing the complete moulded body.

7. Device according to one of claims 2 to 6 with an exchangeable container as a powder reservoir (35), **characterised in that** the exchangeable container is dimensioned so that it can be inserted through the sluice chamber (45) into the processing chamber (5) or can be removed from the processing chamber (5).

8. Device according to one of claims 2 to 7 with a respective exchangeable container (35) as a powder reservoir, **characterised in that** the exchangeable containers (35) are sealed in a gastight manner in the new filled state, and **in that** the seal can be removed in the processing chamber (5) in the protective gas atmosphere.

9. Device according to one of the preceding claims, **characterised in that** it comprises a powder recovery device for recovering unused powder material from the processing chamber (105), whereby the powder recovery device comprises a powder removal device (81, 82) for removing powder from the processing chamber (105) and a powder collecting device (87, 88) for collecting powder removed from the processing chamber (105), whereby the powder recovery device is designed and connected to the processing chamber (105) such that the powder recovery can be performed in an outwardly sealed area, in particular completely in a protective gas atmosphere.

10. Device according to claim 9, **characterised in that** the powder removal device comprises a powder suction device.

11. Device according to claim 10, **characterised in that** the powder suction device comprises a suction nozzle (94) projecting into the processing chamber.

12. Device according to claim 11, **characterised in that** the suction opening of the suction nozzle (94) can be guided to different points inside the processing chamber.

13. Device according to one of claims 9 to 12, **characterised in that** the powder recovery device comprises at least one filter device connected upstream of the powder collecting device.

14. Device according to claim 13, **characterised in that** the filter device comprises at least one powder sieve.

15. Device according to one of claims 9 to 14, **characterised in that** the protective gas supply and removal device comprises a suction nozzle (94) connected to a protective gas suction connection of a pump (90) and projecting into the processing chamber (105) for suctioning protective gas out of the processing chamber 105), whereby the suction nozzle (94) can be used if necessary as an element of the powder removal device for suctioning powder out of the processing chamber (105).

16. Device according to claim 3 or according to a dependent preceding claim, **characterised in that** in the processing chamber housing (5) several separately arranged substrates (17) are provided for building up layers of several moulded bodies, and **in that** the powder layer preparation device comprises powder reservoirs (35) assigned to the individual substrates (17) for providing powder for the respective assembly process.

17. Device according to claim 16, **characterised in that** in the processing chamber (5) at least one separating wall (9) is provided for the lateral delimitation of the substrates (17) from one another.

18. Device according to claim 16 or 17, **characterised in that** the powder layer preparation device comprises a powder delivery device comprising the powder reservoir (35), which powder delivery device comprises a holder which can be moved back and forth over the substrate (17) by means of a drive device (25) and carries the powder reservoir (35).

19. Device according to claim 18, **characterised in that** the layer smoothing device comprises powder scraping elements (37) assigned to the individual substrates (17), whereby the powder scraping elements can be moved together with the powder delivery device on a common holder (29) driven by the drive device.

20. Device according to clam 19, **characterised in that** the powder reservoirs (35) are exchangeable containers and **in that** the exchangeable containers are mounted removably in insertion openings (33) of the movable holder (29).

21. Device according to one of the preceding claims 16 to 20, **characterised in that** each powder reservoir comprises a powder level sensor.

22. Device according to one of the preceding claims 16 to 21, **characterised in that** the powder reservoirs (35) can be filled automatically with powder from external powder sources assigned to the respective powder reservoir in a predefined park position of the movable holder (29) inside the processing chamber housing (5).

23. Device according to one of the preceding claims 16 to 22, **characterised in that** each of the substrates (17) can be mounted in a respective assembly cylinder (15) on and under the base plate of the processing chamber housing (105) and can be adjusted vertically in a controlled manner.

24. Device according to claim 23, **characterised in that** the substrates (17) can be adjusted together vertically by means of a controllable elevator device (19, 21), which comprises an adjusting drive (19) common to all substrates.

25. Device according to one of the preceding claims 16 to 24, **characterised in that** for several, particularly all substrates (17) a common radiation device (67, 69, 71) is provided.

26. Device according to claim 25, **characterised in that** the radiation device (67, 69, 71) has a radiation deflection device (69), in particular an X-Y-scanner device, which can be moved over the substrates and adjusted into respective operating positions for controlled powder radiation.

27. Device according to one of claims 16 to 24, **characterised in that** an individual radiation device is assigned to each substrate for controlled radiation of the powder layer.

## Revendications

1. Dispositif pour la fabrication de corps moulés par constitution par couches de matériau pulvérulent, en particulier métallique ou céramique, avec un boîtier d'espace de traitement (3), un dispositif d'amenée et d'évacuation de gaz protecteur pour générer et maintenir une atmosphère de gaz protecteur, en particulier une atmosphère d'argon dans l'espace de traitement (5), un support (17) pour la constitution par couches, un dispositif d'irradiation (67, 69, 73) pour l'irradiation de la couche pulvérulente de matériau préparée respectivement sur le support (17) dans une zone de section associée à cette couche du modèle du corps moulé avec un rayonnement, en particulier un rayonnement de laser focalisé qui mène la poudre de matériau dans cette zone de section par chauffage à la fusion ou éventuellement au frittage, un dispositif de préparation de couche pulvérulente (29, 35, 37) pour la préparation de la couche pulvérulente de matériau suivante respectivement sur la couche appliquée ou irradiée en dernier, et
au moins une chambre de sas (45 ; 145) raccordée à l'espace de traitement (5 ; 105) avec une porte au choix à ouvrir et fermer (47) vers l'espace de traitement (5 ; 105), la chambre de sas (45 ; 145) étant raccordée à un dispositif d'amenée et d'évacuation de gaz protecteur (55, 59) de sorte que si besoin, une atmosphère de gaz protecteur peut être générée dans la chambre de sas (45 ; 145),
**caractérisé en ce que**
La chambre de sas (45 ; 145) raccordée à l'espace de traitement (5 ; 105) possède en outre une porte (53) au choix à ouvrir et fermer vers une partie environnante séparée de l'espace de traitement (5 ; 105), et
au moins un dispositif de manipulation est prévu et conçu dans respectivement sur le boîtier d'espace de traitement (5 ; 105) et/ou dans respectivement sur la chambre de sas (45 ; 145) de sorte qu'il permette un accès à l'intérieur de l'espace de traitement et à l'intérieur de la chambre de sas (45 ; 145) en maintenant une atmosphère de gaz protecteur générée auparavant dedans,
dans lequel le dispositif de manipulation comprend
- un bras robot commandable dans le boîtier d'espace de traitement et/ou dans la chambre de sas et/ou
- au moins un gant pouvant être atteint par une ouverture (65 ; 165) dans le boîtier d'espace de traitement (5 ; 105) ou dans une paroi extérieure de chambre de sas et terminant l'ouverture (65 ; 165) de manière étanche au gaz vers l'extérieur, au moyen duquel un opérateur peut intervenir dans l'espace de traitement (5 ; 105) et/ou dans la chambre de sas (45 ; 145).

2. Dispositif selon l'une quelconque des revendications précédentes,
**caractérisé en ce**
**que** le dispositif de préparation de couche pulvérulente présente au moins un réservoir de poudre (35) pour la préparation de poudre pour le traitement respectif et un dispositif de délivrance de poudre comprenant le réservoir de poudre (35), lequel dispositif comporte un support entraînant le réservoir de poudre (35) et mobile alternativement de manière à passer outre le support (17).

3. Dispositif selon la revendication 2,
**caractérisé en ce que**
le dispositif de préparation de couche pulvérulente comporte un dispositif de lissage de couche avec au moins un élément racleur de poudre (37) en association au support (17), l'élément racleur de poudre conjointement avec le dispositif de délivrance de poudre pouvant être déplacés sur un support (29) commun.

4. Dispositif selon la revendication 3,
**caractérisé en ce**
**que** le réservoir de poudre (35) est un conteneur interchangeable et en ce que le conteneur interchangeable est logé de manière remplaçable dans des ouvertures d'insertion (33) du support (29) mobile.

5. Dispositif selon la revendication 3 ou 4,
**caractérisé en ce**
**que** le réservoir de poudre (35) présente sur son extrémité inférieure l'élément racleur de poudre (37).

6. Dispositif selon l'une quelconque des revendications 2 à 5,
**caractérisé en ce**
**que** le réservoir de poudre (35) peut recevoir respectivement un volume de réserve de poudre qui suffit pour la préparation d'une pluralité de couches pulvérulentes d'épaisseur prédéterminée, en particulier pour la fabrication du corps moulé complet.

7. Dispositif selon l'une quelconque des revendications 2 à 6 avec un conteneur interchangeable comme réservoir de poudre (35),
**caractérisé en ce**
**que** le conteneur interchangeable est dimensionné de sorte qu'il puisse être inséré et retiré de l'espace de traitement (5) par la chambre de sas (45).

8. Dispositif selon l'une quelconque des revendications 2 à 7 avec un conteneur interchangeable (35) respectif comme réservoir de poudre,
**caractérisé en ce**
**que** les récipients interchangeables (35) sont scellés de manière étanche au gaz à l'état nouvellement rempli et en ce que le scellage dans l'espace de traitement (5) dans l'atmosphère de gaz protecteur peut être supprimé.

9. Dispositif selon l'une quelconque des revendications précédentes,
**caractérisé en ce**
**qu'**il présente un dispositif de récupération de poudre pour la récupération de la poudre de matériau non utilisée de l'espace de traitement (105), le dispositif de récupération de poudre présentant un dispositif de distribution de poudre (81, 82) pour la distribution de poudre hors de l'espace de traitement (105) et un dispositif de ramassage de poudre (87, 88) pour le ramassage de la poudre distribuée hors de l'espace de traitement (105), le dispositif de récupération de poudre étant conçu et raccordé à l'espace de traitement (105) de sorte que la récupération de poudre puisse être réalisée dans une zone fermée vers l'extérieur, en particulier complètement dans l'atmosphère de gaz protecteur.

10. Dispositif selon la revendication 9,
**caractérisé en ce**
**que** le dispositif de distribution de poudre comporte un dispositif d'aspiration de poudre.

11. Dispositif selon la revendication 10,
**caractérisé en ce**
**que** le dispositif d'aspiration de poudre présente une trompe d'aspiration (94) pénétrant dans l'espace de traitement.

12. Dispositif selon la revendication 11,
**caractérisé en ce**
**que** l'ouverture d'aspiration de la trompe d'aspiration (94) peut être guidée vers différents endroits à l'intérieur de l'espace de traitement.

13. Dispositif selon l'une quelconque des revendications 9 à 12,
**caractérisé en ce**
**que** le dispositif de récupération de poudre présente au moins un dispositif de filtrage monté en amont du dispositif de ramassage de poudre.

14. Dispositif selon la revendication 13,
**caractérisé en ce**
**que** le dispositif de filtrage comporte au moins un tamis à poudre.

15. Dispositif selon l'une quelconque des revendications 9 à 14,
**caractérisé en ce**
**que** le dispositif d'amenée et d'évacuation de gaz protecteur comporte une trompe d'aspiration (94) pénétrant dans l'espace de traitement (105) et raccordée à un raccord d'aspiration de gaz protecteur d'une pompe (90) pour l'aspiration de gaz protecteur de l'espace de traitement (105), la trompe d'aspiration (94) pouvant être utilisée si besoin, comme élément du dispositif de distribution de poudre pour l'aspiration de poudre de l'espace de traitement (105).

16. Dispositif selon la revendication 3 ou selon une revendication précédente relative à celle-ci,
**caractérisé en ce**
**que** dans le boîtier d'espace de traitement (5) sont prévus plusieurs supports (17) disposés à part les uns des autres pour la constitution par couches de plusieurs corps moulés et en ce que le dispositif de préparation de couche pulvérulente comporte des réservoirs de poudre (35) associés aux supports (17) individuels pour la mise à disposition de poudre pour le traitement respectif.

17. Dispositif selon la revendication 16,
**caractérisé en ce**
**qu'**au moins une paroi de séparation (9) est prévue dans l'espace de traitement (5) pour la délimitation latérale des supports (17).

18. Dispositif selon la revendication 16 ou 17,
**caractérisé en ce**
**que** le dispositif de préparation de couche pulvérulente présente un dispositif de délivrance de poudre comportant les réservoirs de poudre (35), lequel dispositif comporte un support entraînant les réservoirs de poudre (35) et mobiles alternativement de manière à passer outre les supports (17) au moyen d'un dispositif d'entraînement (25).

19. Dispositif selon la revendication 18,
**caractérisé en ce**
**que** le dispositif de lissage de couche comporte des éléments racleurs de poudre (37) en association aux supports (17) individuels, les éléments racleurs de poudre conjointement avec le dispositif de délivrance de poudre pouvant se déplacer sur un support (29) commun entraîné par le dispositif d'entraînement.

20. Dispositif selon la revendication 19,
**caractérisé en ce**
**que** les réservoirs de poudre (35) sont des récipients interchangeables et en ce que les récipients interchangeables sont logés de manière remplaçable dans des ouvertures d'insertion (33) du support (29) mobile.

21. Dispositif selon l'une quelconque des revendications précédentes 16 à 20,
**caractérisé en ce**
**que** chaque réservoir de poudre présente un capteur de niveau de poudre.

22. Dispositif selon l'une quelconque des revendications précédentes 16 à 21,
**caractérisé en ce**
**que** les réservoirs de poudre (35) peuvent être remplis dans une position d'arrêt fixe prédéterminée du support (29) mobile à l'intérieur du boîtier d'espace de traitement (5) automatiquement en poudre provenant des sources de poudre externes associées aux réservoirs de poudre respectifs.

23. Dispositif selon l'une quelconque des revendications précédentes 16 à 22,
**caractérisé en ce**
**que** chaque support (17) est logé dans un cylindre (15) respectif sur et au-dessous de la plaque de fond du boîtier de l'espace de traitement (105) et peut être réglé verticalement de manière commandée.

24. Dispositif selon la revendication 23,
**caractérisé en ce**
**que** les supports (17) peuvent être réglés verticalement ensemble au moyen d'un dispositif élévateur (19, 21) commandable qui présente un entraînement de réglage (19) commun à tous les supports.

25. Dispositif selon l'une quelconque des revendications précédentes 16 à 24,
**caractérisé en ce**
**qu'**un dispositif d'irradiation (67, 69, 71) commun est prévu pour plusieurs, en particulier tous les supports (17).

26. Dispositif selon la revendication 25,
**caractérisé en ce**
**que** le dispositif d'irradiation (67, 69, 71) présente un dispositif de balayage mobile outre les supports (17) et réglables dans des positions de service respectives pour l'irradiation de couche pulvérulente commandée, en particulier un dispositif à scanner X Y.

27. Dispositif selon l'une quelconque des revendications 16 à 24,
**caractérisé en ce**
**qu'**un propre dispositif d'irradiation est associé à chaque support pour l'irradiation de couche pulvérulente commandée.
